# FASCICULE DE BREVET EUROPEEN

(11) **EP 0 807 276 B1**
(45) Date de publication et mention de la délivrance du brevet: **24.10.2001**
(21) Numéro de dépôt: 96901856.3
(22) Date de dépôt: 25.01.1996
(51) Int. Cl.: G02C 5/00

(54) **MONTURE DE LUNETTES METALLIQUE**
METALLISCHES BRILLENGESTELL
METAL FRAME FOR SPECTACLES

(30) Priorité: 02.02.1995 FR 9501409
(43) Date de publication de la demande: 19.11.1997
(73) Titulaire: Fergaflex Inc., Montréal, Québec H3C 2H1 (CA)
(72) Inventeur: HAUTCOEUR, Alain, F-57158 Montigny-Les-Metz (FR); EBERHARDT, André,, 57045 Metz Cédex 1 (FR)
(74) Mandataire: Maureau, Philippe
(86) Numéro de dépôt international: FR9600129
(87) Numéro de publication internationale: WO9624086

(56) Documents cités:
- EP-A- 0 338 586
- EP-A- 0 508 084
- EP-A- 0 648 856
- WO-A-93/18429
- FR-A- 2 504 284
- US-A- 4 893 917
- US-A- 4 952 044
- PATENT ABSTRACTS OF JAPAN vol. 8 no. 31 (P-253) ,9 Février 1984 & JP,A,58 186719 (SUWA SEIKOSHA) 31 Octobre 1983,
- PATENT ABSTRACTS OF JAPAN vol. 6 no. 34 (P-104) ,2 Mars 1982 & JP,A,56 153317 (SEIKO EPSOM CORP) 27 Novembre 1981,

## Description

La présente invention a pour objet une monture de lunettes comportant au moins certains éléments métalliques tels que branches, pont et/ou barre de liaison entre les cercles retenant les verres de correction de la vue, de protection solaire ou de sécurité ou directement entre lesdits verres.

Il est déjà connu d'utiliser, pour la réalisation de certains éléments constitutifs de montures métalliques de lunettes, des alliages à mémoire de forme.

On appelle alliage à mémoire de forme (AMF), tout alliage métallique, qui peut retrouver sa forme initiale par simple chauffage après avoir subi une déformation permanente à une plus basse température.

Cette propriété est la traduction macroscopique d'un phénomène physique intervenant au niveau de l'organisation atomique de la matière : la transformation martensitique réversible.

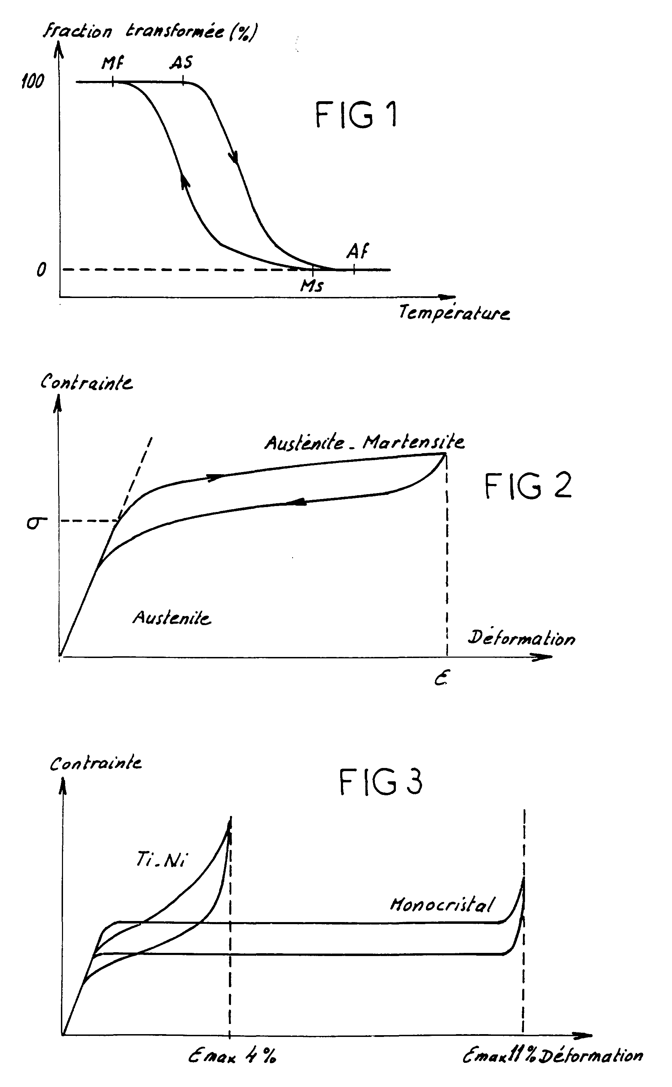

La transformation martensitique peut être décrite du point de vue phénoménologique par la courbe représentée sur la figure 1, dans laquelle la température est portée en abscisses et la fraction transformée est portée en ordonnées.

Au refroidissement (transformation martensitique directe), la martensite commence à se former à partir de la température Ms "martensite start" et l'échantillon est complètement martensitique à la température Mf "martensite finish".

Au réchauffage (transformation inverse, l'austénite (ou phase β ) commence à se former à une température As "austénite start" et l'échantillon est complètement austénitique pour la température Af "austénite finish".

La transition martensitique réversible est à l'origine des propriétés spécifiques des alliages à mémoire de forme :
- effet mémoire simple sens,
- effet mémoire double sens,
- effet superélastique,
- effet caoutchoutique.

La transformation martensitique se produit non seulement pour T < Ms, mais aussi pour T > Ms, par application d'une contrainte mécanique. Si on relâche cette contrainte pour un alliage déformé à T > Af, il a transformation inverse de la martensite en austénite avec une hystérésis de transformation. Ce phénomène est appelé effet superélastique. Il est illustré par la figure 2, dans laquelle la déformation est portée en abscisses et la contrainte mécanique est portée en ordonnées.

La déformation εₘₐₓ est la déformation ε maximale que peut supporter un alliage à mémoire de forme sans qu'une déformation plastique irréversible ne subsiste après libération de l'alliage à mémoire de forme de toute contrainte mécanique.

La norme NF A 51-080 définit le vocabulaire et les mesures associées aux alliages à mémoire de forme. Les termes utilisés dans ce texte s'y réfèrent.

Il existe, à l'heure actuelle, des montures de lunettes comprenant des branches, ponts ou des barres, où tout ou partie de ces composants sont constitués d'alliage à mémoire de forme superélastique. L'alliage à mémoire de forme utilisé pour la réalisation de ces composants est un alliage à base de titane et nickel. D'importantes difficultés de réalisation et de résistance mécanique des montures de lunettes en résultent :
- Faible résistance en fatigue des alliages de Ti-Ni qui, après quelques centaines de cycles de contraintes, présentent une rupture fragile.
- Un écrouissage peut être utilisé pour pallier la mauvaise résistance en fatigue des alliages de Ti-Ni, mais dans ce cas la déformation superélastique εₘₐₓ reste limitée à quelques 3 à 4 %. Au-delà de cette limite, la raideur de l'alliage de Ti-Ni augmente rapidement et l'alliage tend à se rompre.
- Les alliages de Ti-Ni contiennent une forte proportion de nickel et doivent être revêtus de nickel pour l'assemblage par brasure à l'argent habituellement utilisée en lunetterie. Or, l'élément nickel peut provoquer des allergies au porteur des montures de lunettes.
- L'assemblage des composants superélastiques en alliage de Ti-Ni avec des composants constitués de métaux classiques couramment utilisés en lunetterie (monel, maillechort, bronzes, cupro-bérylium, aciers inoxydables, alliages de titane) ne peut être facilement réalisé.

Les méthodes actuellement utilisées pour l'assemblage des composants superélastiques avec les composants classiques (ne possédant pas la propriété de superélasticité) sont au nombre de trois :
- La première consiste à emmancher en force l'extrémité ou les extrémités du composant superélastique dans un manchon constitué d'un métal qui peut être brasé à l'argent. Puis, le composant superélastique étant manchonné, on brase le manchon avec les composants classiques.
   On notera qu'un revêtement galvanique de nickel peut être utilisé pour améliorer le manchonnage et le brasage.
- La seconde consiste à revêtir le composant superélastique d'une couche galvanique de nickel puis à braser avec le composant classique avec une brasure à l'argent.
- La troisième consiste à souder par faisceau d'énergie : laser ou faisceau d'électrons les composants superélastiques sur les composants classiques. Ces méthodes coûteuses sont, toutefois, rarement utilisées en lunetterie.

D'autres alliages à mémoire de forme ont été envisagés pour la réalisation de composants de montures de lunettes superélastiques. Ces essais et les brevets ayant pu en résulter font mention des alliages Cu-Zn-X (avec X = AI, Sn,...), Cu-AI-Ni. De tels alliages sont décrits notamment dans les documents FR-A-2 504 284, US-A-4 893 917 et JP-A-58-186 719, ce dernier document mentionnant une surstructure cristalline. Toutefois, il s'agit d'alliages polycristallins. Mais, en comparaison des alliages à base de Ti-Ni, ces alliages ne peuvent supporter des déformations εₘₐₓ de plus de 3 à 4 %. Au-delà, leur structure granulaire grossière les fragilise et ils rompent.

Actuellement, est recherchée une amélioration de la résistance mécanique et de la mise en oeuvre des alliages à mémoire de forme utilisés en lunetterie comme le Ti-Ni, ainsi que des autres alliages à mémoire de forme.

Les méthodes utilisées consistent à durcir le matériau afin que sa limite élastique soit la plus élevée possible.

Pour cela, on recherche une structure à grains très fins, obtenue soit par la recristallisation des structures grossières de fonderie après des écrouissages importants, soit par durcissement structural obtenu au cours de traitements thermiques faisant précipiter des phases dures, soit encore par un écrouissage à froid.

L'inconvénient majeur de ces méthodes est de limiter fortement les déformations associées à la superélasticité. Les joints de grains, les précipités et l'écrouissage bloquent la transformation martensitique et amènent à une forte augmentation de la raideur de l'alliage superélastique.

Le but de l'invention est de fournir une monture de lunettes métallique dans laquelle certains éléments, tels que branches, ponts ou barres, soient réalisés en un alliage susceptible de déformation sous l'action de contraintes mécaniques, tout en reprenant parfaitement leur forme dès qu'une contrainte cesse d'être exercée.

En outre, il convient que de tels éléments puissent subir un nombre important de cycles de flexions sans rupture. Il convient également que de tels éléments puissent être assemblés facilement aux autres éléments constitutifs de la monture de lunettes.

A cet effet, la monture qu'elle concerne comporte des branches, et/ou un pont et/ou une ou plusieurs barres réalisés en alliage à mémoire de forme. Elle est caractérisée en ce que cet alliage est monocristallin, c'est-à-dire constitué d'un seul cristallite ou de plusieurs cristallites séparés par des joints à faible désorientation, et choisi parmi les alliages à base de Cu ou de Fe.

L'utilisation d'un alliage à mémoire de forme monocristallin est avantageuse, dans la mesure où elle permet de bénéficier d'une structure la plus homogène possible du point de vue microscopique, afin qu'aucune concentration de contraintes mécaniques locales n'apparaisse. Les alliages à mémoire de forme sont choisis parmi les alliages à base de cuivre suivants :
Cu - Zn - Al,
Cu - Al - Ni,
Cu - Al - Be,
Cu - Al - Mn,
ou parmi les alliages à base de fer suivants :
Fe - Mn - Si,
Fe - Mn - Cr,
Fe - Mn - Cr - Si.

Un premier avantage de ces alliages est qu'ils sont beaucoup moins coûteux que les alliages Ti-Ni utilisés habituellement. En outre, ils présentent des caractéristiques de déformation bien supérieures puisque la déformation maximale est de l'ordre de 11 %, au moins entre - 40°C et + 80°C soit de 2 à 3 fois supérieure à celle d'un alliage Ti-Ni, sans qu'aucune augmentation de la raideur ne soit observée, ce qui constitue un avantage certain pour la personne portant la monture de lunettes en cas d'incident comme un choc.

On notera que ces mêmes alliages Cu-Zn-AI, Cu-AI-Ni, Cu-AI-Be ou Cu-AI-Mn et Fe-Mn-Si, Fe-Mn-Cr ou Fe-Mn-Cr-Si lorsqu'ils ont une structure polycristalline, par opposition à la structure monocristalline, ne peuvent se déformer de plus de 3 à 4 % et ont une résistance en fatigue très limitée.

Dans une telle circonstance, la monture se déforme et après le choc la monture de lunettes revient à sa géométrie d'origine sans déformation résiduelle.

Les propriétés de fatigue d'un élément réalisé conformément à l'invention sont également avantageuses. Alors qu'un élément en alliage de Ti-Ni présente un risque de rupture après quelques centaines de cycles de contraintes, les éléments réalisés en alliage à mémoire de forme monocristallin, selon l'invention, peuvent supporter plusieurs milliers de cycles sans rupture. Il n'est donc pas nécessaire d'écrouir un tel élément pour lui conférer une meilleure résistance à la fatigue. Au contraire, l'écrouissage d'un alliage à mémoire de forme monocristallin risquerait de procurer une altération des caractéristiques de superélasticité. Les éléments réalisés conformément à l'invention conservent avantageusement leurs propriétés de déformabilité sur un domaine de température s'étalant sur au moins 120°C. Ainsi, par exemple, les composants monocristallins superélastiques conservent un retour élastique sans aucune déformation résiduelle de - 40°C à + 80°C par opposition aux alliages de Ti-Ni dont les températures d'utilisation sont comprises entre -20 et +40°C.

Il doit être noté que, parmi les alliages à mémoire de forme utilisés pour réaliser les éléments selon l'invention, ceux à base de Cu-Zn-AI, Cu-AI-Ni, Cu-AI-Mn, Cu-AI-Be et ceux à base de Fe-Mn-Si, Fe-Mn-Cr ou Fe-Mn-Cr-Si, sont directement soudables ou brasables avec les autres alliages couramment utilisés en lunetterie.

On remarque que les brasures à l'argent sont directement utilisables sur les alliages à mémoire de forme cuivreux monocristallins grâce à l'absence de joints de grains. En effet, la présence de joints de grains lors de la brasure se traduit par la formation de composés intermétalliques dans ces joints de grains, ces composés fragilisant la tenue mécanique des joints.

De plus, ces alliages à mémoire de forme monocristallin n'ayant pas besoin d'un écrouissage ou d'un durcissement structural, la soudure ou la brasure ne modifie pas l'état de l'alliage à mémoire de forme superélastique tout en permettant d'utiliser le matériel existant dont les coûts de mise en oeuvre et d'amortissement sont peu élevés.

Il est ainsi possible de souder directement les éléments selon l'invention sur des éléments constitutifs de la monture réalisée en des alliages métalliques couramment utilisés en lunetterie. C'est ainsi notamment que les branches peuvent être soudées directement sur les cercles de la monture, ou, chaque branche peut être équipée d'une barrette de torsion destinée à être soudée sur une cercle de la monture.

Pour favoriser la flexion au niveau des branches, il est possible de réaliser des amincissements de matière jouant le rôle de charnières, sans toutefois avoir recours à des éléments de charnières tels qu'ils sont connus actuellement dans le domaine de la lunetterie. Un avantage de ce type d'articulation des branches sur le corps de la monture est de permettre l'ouverture automatique des branches dès la sortie d'un étui à lunettes, ce qui permet de les placer d'une seule main sur le visage.

Il est également possible de prévoir d'autres zones d'amincissement pour pouvoir replier en deux la monture. Il est possible, dans un tel cas, de prévoir des zones d'amincissement sur le pont reliant les deux cercles, sur l'éventuelle barre disposée entre ceux-ci, ainsi qu'au milieu de chaque branche.

Suivant une autre caractéristique de l'invention, un traitement thermomécanique classique peut être effectué localement à l'extrémité de chaque branche, pour faire passer celle-ci d'un comportement superélastique à un comportement plastique, permettant le réglage sur le contour de l'oreille. Ce traitement peut aussi facilement être effectué sur une partie quelconque des ponts et/ou des branches de la monture.

Selon une autre forme d'exécution, le pont en alliage à mémoire de forme monocristallin est fixé directement aux verres, et les branches en alliage à mémoire de forme monocristallin sont fixées soit directement sur les verres, soit sur des charnières qui sont elles-mêmes fixées directement sur les verres.

Une autre caractéristique avantageuse des éléments selon l'invention est qu'il ne contiennent pas de nickel pour les alliages autres que Cu-Al-Ni ce qui évite tout risque d'allergie de la part du porteur des lunettes, résultant du contact d'un alliage contenant ce composant.

Les éléments en alliage à mémoire de forme, selon l'invention, sont obtenus à partir d'un fil en alliage à mémoire de forme monocristallin dont la section peut s'inscrire dans un cercle de diamètre inférieur à 4 mm. Cette caractéristique permet une mise en forme facile pour obtenir les éléments, sans nécessiter de déformation importante résultant d'un écrouissage dommageable à la structure monocristalline et aux propriétés qui en découlent.

Suivant une autre caractéristique de l'invention, les éléments sont réalisés en un alliage à mémoire de forme monocristallin dont la température de transformation Af, à partir de laquelle la martensite commence à se former, est comprise entre - 100 et - 20°C.

De toute façon, l'invention sera bien comprise à l'aide de la description qui suit, en référence au dessin schématique annexé représentant, à titre d'exemples non limitatifs, plusieurs formes d'exécution d'une paire de lunettes.
Figure 3 est une vue d'un diagramme représentant la déformation d'un élément selon l'invention en fonction de la contrainte exercée sur celui-ci ;
Figure 4 est une vue en perspective d'une paire de lunettes ;
Figure 5 est une vue en perspective d'une partie de paire de lunettes montrant plus spécialement l'articulation d'une branche sur un cercle ;
Figure 6 est une vue en perspective d'une autre paire de lunettes.

La figure 3 représente un diagramme de déformation d'un élément en alliage à mémoire de forme monocristallin, selon l'invention, en fonction de la contrainte exercée sur lui. Comme montré à la partie gauche du diagramme, la déformation élastique d'un élément en titane-nickel ne dépasse pas 4 %. Au contraire, la déformation élastique d'un élément réalisé en un alliage à mémoire de forme selon l'invention atteint 11 %, cette valeur de la déformation étant obtenue avec une valeur de contrainte inférieure à celle nécessaire pour obtenir la déformation maximale de l'élément en titane-nickel.

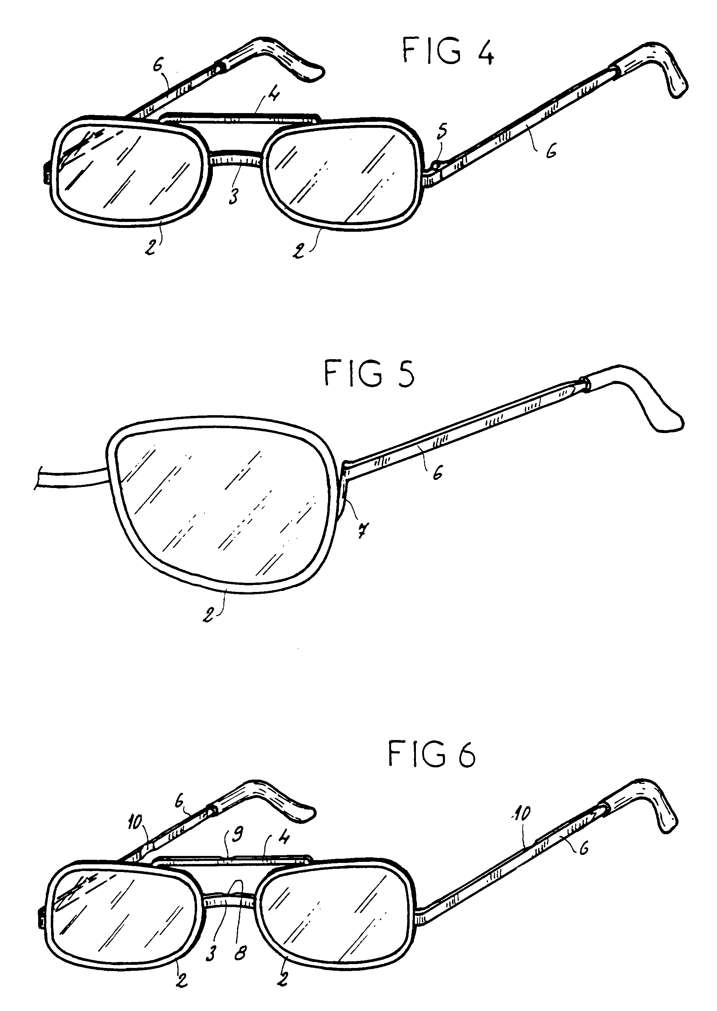

La figure 4 représente une paire de lunettes comportant deux cercles 2 destinés à recevoir les verres reliés l'un à l'autre par un pont 3 et par une barre 4. Sur chaque cercle 2 est montée, articulée à l'aide d'une charnière 5, une branche 6. Le pont 3, la barre 4 et les branches 6 peuvent être réalisés en alliage à mémoire de forme monocristallin conformément aux dispositions indiquées précédemment.

La figure 5 représente une variante d'exécution dans laquelle chaque branche 6 est montée sur le cercle 2 correspondant, par soudage, par l'intermédiaire d'une barrette de torsion 7. Il n'y a donc plus de charnière réelle, l'alliage permettant, compte tenu de ses possibilités, de réaliser la fonction de basculement des branches vers la position de fermeture. Il serait également possible, sans mettre en oeuvre une barrette 7, de prévoir, au niveau de la branche 6, et à proximité de son extrémité soudée sur le cercle 2, un amincissement de matière favorisant la flexion.

La figure 6 représente une autre forme d'exécution d'une lunette dont la monture est destinée à être pliée en deux. Dans ce cas, le pont 3 comporte une zone amincie centrale 8, la barre 4 présente une zone amincie centrale 9, et chacune des branches 6 comprend une zone amincie centrale 10.

Il est ainsi possible, tout d'abord, de replier les deux branches 6 sur elles-mêmes par pivotement autour des zones amincies 10, puis de plier la monture sur elle-même par pivotement autour des zones amincies 8, 9.

Comme il ressort de ce qui précède, l'invention apporte une grande amélioration à la technique existante en fournissant une monture de lunettes mettant en oeuvre des éléments en alliage à mémoire de forme qui possèdent une excellente capacité de déformation, qui ne présentent pas les risques habituels de rupture après un certain nombre de déformations, qui peuvent être directement soudables ou brasables sur les autres éléments des lunettes réalisées en alliage traditionnel, et qui permettent un pliage sans utilisation de charnière, ce qui limite le nombre de composants d'une telle monture.

Comme il va de soi, l'invention ne se limite pas aux seules formes d'exécution de cette monture décrites ci-dessus à titre d'exemples ; elle en embrasse, au contraire, toutes les variantes. C'est ainsi que le pont en alliage à mémoire de forme pourrait être fixé directement sur les verres, et les branches en alliage à mémoire de forme monocristallin pourraient être fixées soit directement sur les verres, soit sur des charnières qui sont elles-mêmes fixées directement sur les verres.

## Revendications

1. Monture de lunettes métallique, comportant des branches (6) et/ou un pont (3) et/ou une ou plusieurs barres (4) réalisés en alliage à mémoire de forme, **caractérisée en ce que** cet alliage est monocristallin, c'est-à-dire constitué d'un seul cristallite ou de plusieurs cristallites séparés par des joints à faible désorientation, et choisi parmi les alliages à base de Cu ou de Fe.

2. Monture selon la revendication 1, **caractérisée en ce que** les éléments (3, 4, 6) en alliage à mémoire de forme sont choisis parmi les alliages à base de Cu suivants : Cu-Zn-AI, Cu-Al-Ni, Cu-Al-Be, Cu-Al-Mn.

3. Monture selon la revendication 1, **caractérisée en ce que** les éléments (3, 4, 6) en alliage à mémoire de forme sont choisis parmi les alliages à base de Fe suivants : Fe-Mn-Si, Fe-Mn-Cr, Fe-Mn-Cr-Si.

4. Monture selon l'une quelconque des revendications 1 à 3, **caractérisée en ce que** la température de transformation (Af) à partir de laquelle, pour l'alliage à mémoire de forme considéré, la martensite commence à se former, est comprise entre -100°C et -20°C.

5. Monture selon l'une quelconque des revendications 1 à 4, **caractérisée en ce que** les éléments en alliage à mémoire de forme possèdent une capacité de déformation superélastique de 11 %, au moins entre -40°C et + 80°C.

6. Monture selon l'une quelconque des revendications 1 à 5, **caractérisée en ce que** les éléments (3, 4, 6) en alliage à mémoire de forme sont obtenus à partir d'un fil en alliage à mémoire de forme monocristallin, dont la section peut s'inscrire dans un cercle de diamètre inférieur à 4 mm.

7. Monture selon l'une quelconque des revendications 1 à 6, **caractérisée en ce que** les éléments (3, 4, 6) en alliage à mémoire de forme monocristallin sont soudables directement sur d'autres éléments constitutifs de la monture et réalisés en des alliages métalliques couramment utilisés en lunetterie.

8. Monture selon la revendication 7, **caractérisée en ce que** les branches (6) sont soudées directement sur les cercles (2) de la monture.

9. Monture selon la revendication 7, **caractérisée en ce que** les branches (6) sont équipées chacune d'une barrette de torsion (7) destinée à être soudée sur un cercle de la monture.

## Patentansprüche

1. Metall-Brillenfassung, die Bügel (6) und/oder einen Mittelsteg (3) und/oder ein oder mehrere Glieder (4) aufweist, die aus einer Legierung mit Formerinnerungsvermögen realisiert sind,
**dadurch gekennzeichnet, dass**
die Legierung monokristallin, d.h. aus einem einzigen Kristallit oder aus mehreren, durch Verbindungsstellen mit schwacher Desorientierung, getrennten Kristalliten gebildet ist und aus den Legierungen auf Cu- oder Fe-Basis ausgewählt ist.

2. Fassung nach Anspruch 1,
**dadurch gekennzeichnet, dass**
die Elemente (3, 4, 6) aus Legierung mit Formerinnerungsvermögen aus folgenden Legierungen auf Cu-Basis ausgewählt sind: Cu-Zn-Al, Cu-Al-Ni, Cu-Al-Be, Cu-Al-Mn.

3. Fassung nach Anspruch 1,
**dadurch gekennzeichnet, dass**
die Elemente (3, 4, 6) aus Legierung mit Formerinnerungsvermögen aus folgenden Legierungen auf Fe-Basis ausgewählt sind: Fe-Mn-Si, Fe-Mn-Cr, Fe-Mn-Cr-Si.

4. Fassung nach einem der Ansprüche 1 bis 3,
**dadurch gekennzeichnet, dass**
die Transformationstemperatur (Af), ab der sich der Martensit für die betreffende Legierung mit Formerinnerungsvermögen zu bilden beginnt, zwischen -100°C und -20°C beträgt.

5. Fassung nach einem der Ansprüche 1 bis 4,
**dadurch gekennzeichnet, dass**
die Elemente aus der Legierung mit Formerinnerungsvermögen mindestens zwischen -40°C und +80°C ein superelastisches Formänderungsvermögen von 11 % aufweisen.

6. Fassung nach einem der Ansprüche 1 bis 5,
**dadurch gekennzeichnet, dass**
die Elemente (3, 4, 6) aus der Legierung mit Formerinnerungsvermögen ausgehend von einem Draht aus monokristalliner Legierung mit Formerinnerungsvermögen erhalten sind, dessen Querschnitt in einen Kreis mit weniger als 4 mm Durchmessers einbeschrieben werden kann.

7. Fassung nach einem der Ansprüche 1 bis 6,
**dadurch gekennzeichnet, dass**
die Elemente (3, 4, 6) aus monokristalliner Legierung mit Formerinnerungsvermögen direkt an andere Bestandteile der Fassung schweißbar sind, die in Metall-Legierungen ausgeführt sind, die gewöhnlich in der Brillenherstellung verwendet werden.

8. Fassung nach Anspruch 7,
**dadurch gekennzeichnet, dass**
die Bügel (6) direkt an die Ringe (2) der Fassung angesetzt sind.

9. Fassung nach Anspruch 7,
**dadurch gekennzeichnet, dass**
die Bügel (6) jeweils mit einem Torsionssteg (7) versehen sind, der dazu bestimmt ist, an einen Ring der Fassung angesetzt zu sein.

## Claims

1. Metal spectacle frame, comprising arms (6) and/or a bridge (3), and/or one or a plurality of bars (4) made of form memory alloy, **characterised in that** this alloy is monocrystalline, i.e. it consists of a single crystallite, or of a plurality of crystallites separated by bonds with low disorientation, and is selected from amongst the alloys based on Cu or Fe.

2. Frame according to claim 1, **characterised in that** the elements (3, 4, 6) which are made of form memory alloy are selected from amongst the following alloys based on Cu: Cu-Zn-Al, Cu-Al-Ni, Cu-Al-Be, Cu-Al-Mn.

3. Frame according to claim 1, **characterised in that** the elements (3, 4, 6) which are made of form memory alloy are selected from amongst the following alloys based on Fe: Fe-Mn-Si, Fe-Mn-Cr, Fe-Mn-Cr-Si.

4. Frame according to any one of claims 1 to 3, **characterised in that** the transformation temperature (Af) starting from which the martensite begins to form, for the form memory alloy concerned, is between -100°C and -20°C.

5. Frame according to any one of claims 1 to 4, **characterised in that** the elements which are made of form memory alloy have a capacity for superelastic deformation of at least 11%, between -40°C and +80°C.

6. Frame according to any one of claims 1 to 5, **characterised in that** the elements (3, 4, 6) which are made of form memory alloy are obtained from a monocrystalline form memory alloy wire, the cross-section of which can be inserted in a circle with a diameter smaller than 4 mm.

7. Frame according to any one of claims 1 to 6, **characterised in that** the elements (3, 4, 6) which are made of form memory alloy can be welded directly onto other elements which constitute the frame, and are made of metal alloys which are commonly used in making of spectacles.

8. Frame according to claim 7, **characterised in that** the arms (6) are welded directly onto the rims (2) of the frame.

9. , Frame according to claim 7, **characterised in that** the arms (6) are each equipped with a torsion bar (7), which is designed to be welded onto a rim of the frame.
